# EUROPÄISCHE PATENTANMELDUNG

(11) **EP 1 970 269 A2**
(43) Veröffentlichungstag der Anmeldung: **17.09.2008**
(21) Anmeldenummer: 08102569.4
(22) Anmeldetag: 13.03.2008
(51) Int. Cl.: B60S 1/52

(54) **Hubdüse, insbesondere in einer Scheinwerferreinigungsanlage**

(30) Priorität: 13.03.2007 DE 202007003861 U
(71) Anmelder: MANN+HUMMEL GmbH, 71638 Ludwigsburg (DE)
(72) Erfinder: Hummel, Karl-Ernst, 74321 Bietigheim-Bissingen (DE); Talmon-Gros, Dietmar, 71717 Beilstein (DE); Eder, Roman, 71638 Ludwigsburg (DE); Meier, Dirk, 37581 Bad Gandersheim (DE)

(57) **Zusammenfassung**

Eine Hubdüse (2), insbesondere in einer Scheinwerferreinigungsanlage (1), weist ein in einem Gehäuse (5) verstellbar angeordnetes Düsenrohr (6) mit einem Strömungskanal (7) für Fluid auf, wobei das Düsenrohr (6) durch den Druck des Fluids von einer Außerbetriebsposition in eine Betriebsposition verstellbar ist. Auch die Überführung von der Betriebsposition in die Außerbetriebsposition wird durch den Druck des Fluids bewerkstelligt.

## Beschreibung

### Technisches Gebiet

Die Erfindung bezieht sich auf eine Hubdüse, insbesondere in einer Scheinwerferreinigungsanlage in einem Kraftfahrzeug, nach dem Oberbegriff des Anspruches 1.

### Stand der Technik

In der DE 199 18 759 A1 wird eine Scheinwerferreinigungsanlage für ein Kraftfahrzeug beschrieben, die eine in die Außenwandung des Kraftfahrzeugs integrierte, teleskopartig in eine Betriebsposition ausfahrbare Hubdüsenanordnung umfasst. Die Überführung zwischen der zurückgezogenen Außerbetriebsposition und der ausgefahrenen Betriebsposition wird entweder mithilfe eines elektromotorischen Antriebes oder, gemäß einer weiteren in der DE 199 18 759 A1 genannten Ausführung, mittels eines von innen aufgebrachten Wasserdrucks durchgeführt, der ein Düsenrohr aus dem Gehäuse teleskopartig nach außen verschiebt. In das Düsenrohr ist ein Strömungskanal eingebracht, über den in der Betriebsposition das Reinigungswasser austreten kann.

Das Zurückverfahren des Düsenrohrs aus der ausgelenkten Betriebsposition in die zurückgezogene Außerbetriebsposition erfolgt üblicherweise durch die Kraft einer vorgespannten Feder, die das Düsenrohr in die Außerbetriebsposition kraftbeaufschlagt. Dieser Federdruck muss allerdings beim Ausfahren des Düsenrohrs von dem Wasserdruck überwunden werden, was einen verhältnismäßig hohen Druck voraussetzt. Dieser hohe Druck muss außerdem während des gesamten Betriebszeitraumes aufrechterhalten werden, während dem das Wasser über den Düsenkanal im Düsenrohr austritt. Um sicherzustellen, dass das Düsenrohr wieder in die Außerbetriebsposition verfährt, muss die Feder mit verhältnismäßig hoher Federkraft ausgelegt sein. Dies setzt auch eine entsprechende Dimensionierung der das Fluid fördernden Pumpe und der Leitungen voraus.

### Offenbarung der Erfindung

Der Erfindung liegt die Aufgabe zugrunde, eine Hubdüse mit einem Düsenrohr anzugeben, das mit einfachen konstruktiven Maßnahmen zwischen einer zurückgezogenen Außerbetriebsposition und einer ausgefahrenen Betriebsposition verstellbar ist. Auf den Einsatz einer Feder zum Rückholen des Düsenrohrs von der Betriebsposition in die Außerbetriebsposition soll gegebenenfalls verzichtet werden können.

Diese Aufgabe wird erfindungsgemäß mit den Merkmalen des Anspruches 1 gelöst. Die Unteransprüche geben zweckmäßige Weiterbildungen an.

Die erfindungsgemäße Hubdüse, die insbesondere in einer Scheinwerferreinigungsanlage in einem Kraftfahrzeug zum Einsatz kommt, weist in einem Gehäuse ein verstellbar angeordnetes Düsenrohr mit einem darin verlaufenden Düsen- bzw. Strömungskanal für ein Fluid auf, insbesondere für Reinigungswasser. Dieses Düsenrohr ist durch den Druck des Fluids von der Außerbetriebsposition in die Betriebsposition verstellbar, und zwar in der Weise, dass in der Außerbetriebsposition das Fluid in einen ersten Druckraum im Gehäuse eintritt und das Düsenrohr in Richtung der Betriebsposition beaufschlagt. In der Betriebsposition kommuniziert der erste Druckraum mit dem Strömungskanal im Düsenraum, so dass das Fluid über den ersten Druckraum in den Strömungskanal im Düsenrohr eintreten und aus dem Düsenrohr ausgespritzt werden kann.

Des Weiteren ist im Gehäuse ein vom ersten Druckraum separat ausgebildeter, zweiter Druckraum vorgesehen, in den ebenfalls Fluid einfüllbar ist, wobei das in den zweiten Druckraum eingeströmte Fluid das Düsenrohr aus der Betriebsposition in Richtung der Außerbetriebsposition beaufschlagt. Hierdurch ist es möglich, beide Stellbewegungen des Düsenrohres, also sowohl von der Außerbetriebsposition in die Betriebsposition als auch in umgekehrter Richtung, allein über den von dem Fluid erzeugten Druck durchzuführen. Weitere aktive oder passive Stellglieder wie z.B. Federelemente können zwar grundsätzlich zur Unterstützung der Rückholbewegung vorgesehen sein, sie sind aber nicht zwingend erforderlich. Die Bewegung des Düsenrohrs sowohl in die Betriebsposition als auch wieder zurück in die Außerbetriebsposition kann grundsätzlich allein über den Fluiddruck durchgeführt werden.

Gemäß zweckmäßiger Ausführung ist vorgesehen, dass der erste und der zweite Druckraum im Gehäuse der Hubdüse jeweils mit einer zugeordneten ersten bzw. zweiten Strömungsöffnung im Gehäuse verbunden ist, über die dem jeweils zugeordneten Druckraum Fluid zuführbar bzw. aus diesem ableitbar ist. Diese Strömungsöffnungen im Gehäuse können mit entsprechenden Strömungsleitungen einer Pumpe verbunden werden, wobei je nach Förderrichtung der Pumpe Fluid in den ersten bzw. zweiten Druckraum eingeleitet und, sofern erforderlich, zugleich aus dem jeweils anderen Druckraum abgeleitet wird. Dadurch ist sichergestellt, dass bei einer Bewegung des Düsenrohres das Fluid aus dem sich jeweils verkleinernden Druckraum abströmen kann.

Die Druckräume sind zweckmäßigerweise über eine Trennwand oder dergleichen separiert, die fest mit dem Düsenrohr verbunden ist und eine Drucktrennung zwischen den Druckräumen sicherstellt. Das in den jeweiligen Druckraum einströmende Fluid beaufschlagt die Trennwand mit einer verstellenden Kraft zur Verstellung des Düsenrohres in die gewünschte Richtung.

Bei der Verstellbewegung des Düsenrohres handelt es sich insbesondere um eine ausschließlich translatorische Stellbewegung im Sinne einer Teleskopbewegung. Grundsätzlich kommen aber auch rotatorische oder gemischt translatorisch-rotatorische Stellbewegungen bei der Überführung zwischen Außerbetriebs- und Betriebsposition in Betracht.

Vorteilhafterweise wird der Strömungskanal in dem Düsenrohr, über den das Fluid austritt, mit dem Erreichen der Betriebsposition mit dem ersten Druckraum, in den das Fluid zur Ausübung der Verstellbewegung des Düsenrohres eintritt, zusammengeschaltet, so dass bei weiterer Druckbeaufschlagung nach Beendigung der Verstellbewegung in Richtung Betriebsposition das Fluid aus dem ersten Druckraum in den Strömungskanal im Düsenrohr einströmt und das Düsenrohr über die Mündungsöffnung verlässt. Die Kommunikationsverbindung zwischen erstem Druckraum und Strömungskanal im Düsenrohr wird vorzugsweise erst mit dem Erreichen der Betriebsposition freigeschaltet. Gemäß alternativer Ausführung kann es aber auch zweckmäßig sein, bereits vor Erreichen der Endposition die Strömungsverbindung freizugeben, so dass bereits während der Elongationsbewegung des Düsenrohres Fluid aus diesem austritt.

Gemäß einer weiteren Alternative erfolgt die Einleitung des Fluids in den Strömungskanal im Düsenrohr nicht über den ersten Druckraum, sondern über eine zusätzliche Strömungsverbindung, die in das Gehäuse der Hubdüse eingebracht ist.

Die Verbindung zwischen dem ersten Druckraum und dem Strömungskanal im Düsenrohr erfolgt vorteilhafterweise über einen Verbindungskanal, der in der Betriebsposition des Düsenrohrs freigegeben ist und insbesondere in die Trennwand zwischen den beiden Druckräumen eingebracht ist, welche fest mit dem Düsenrohr verbunden ist und die gleiche Stellbewegung wie das Düsenrohr ausübt. Sofern erst mit Erreichen der endgültigen Betriebsposition Fluid aus dem Düsenrohr austreten soll, wird dieser Verbindungskanal auch erst mit Erreichen dieser Endstellung des Düsenrohres in Kommunikation mit dem ersten Druckraum geschaltet; vor dem Erreichen der Betriebsposition ist dagegen der Verbindungskanal vom Druckraum abgeschnitten. Konstruktiv kann dies dadurch realisiert werden, dass der Verbindungskanal quer zur Verstellrichtung des Düsenrohres verläuft, wobei eine Mündungsöffnung des Verbindungskanals in Außerbetriebsposition an der Innenwand des Gehäuses anliegt und dadurch verschlossen ist, wohingegen in der Betriebsposition diese Mündungsöffnung in Kommunikation mit einem in die Innenwand des Gehäuses eingebrachten Bypass gelangt, über den das Fluid aus dem ersten Druckraum in den Verbindungskanal einströmen kann.

Die Hubdüse ist vorteilhafterweise Bestandteil einer Scheinwerferreinigungsanlage in einem Kraftfahrzeug, die mit einer Pumpe zur Förderung des Fluids wahlweise in den ersten oder in den zweiten Druckraum versehen ist. Bei dieser Pumpe kommen verschiedene Ausführungen in Betracht; möglich ist beispielsweise eine Pumpe mit einem Schaltventil, über dessen Position der von der Pumpe geförderte Fluidstrom wahlweise in die erste oder in die zweite Strömungsöffnung im Gehäuse gefördert wird. Bei dieser Ausführung können einfach aufgebaute, so genannte Monopumpen mit gleichbleibender Motordrehrichtung eingesetzt werden.

Alternativ ist aber auch die Verwendung einer Dualpumpe möglich, die ohne ein derartiges Schaltventil direkt mit den beiden Strömungsöffnungen im Gehäuse verbunden ist, wobei die Fluidförderung in die erste oder in die zweite Strömungsöffnung über die Drehrichtung des Pumpenmotors der Dualpumpe gesteuert wird.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch eine Hubdüse in einer Scheinwerferreinigungsanlage mit einer steuerbaren Pumpe, die mit zwei Strömungsöffnungen im Gehäuse der Hubdüse verbunden ist, wobei die Förderung von Fluid in die jeweilige Strömungsöffnung einstellbar ist, mit einem axial teleskopartig verstellbaren Düsenrohr im Gehäuse der Hubdüse, dargestellt in der zurückgezogenen Außerbetriebesposition,

Fig. 2 die Hubdüse in der Betriebsposition mit ausgefahrenem Düsenrohr, über das Fluid austreten kann,

Fig. 3 die Hubdüse zu Beginn der Überführungsbewegung von der Betriebsposition zurück in die eingezogene Außerbetriebsposition, die durch Umkehrung der Förderrichtung des Fluids durchgeführt wird,

Fig. 4 bis 6 eine den Fig. 1 bis 3 entsprechende Darstellung der Hubdüse, jedoch mit einem der Hubdüse vorgelagerten Schaltventil zur Steuerung der Fluidförderung in die erste oder wahlweise in die zweite Strömungsöffnung im Gehäuse.

In den Figuren sind gleiche Bauteile mit gleichen Bezugszeichen versehen.

### Ausführungsformen der Erfindung

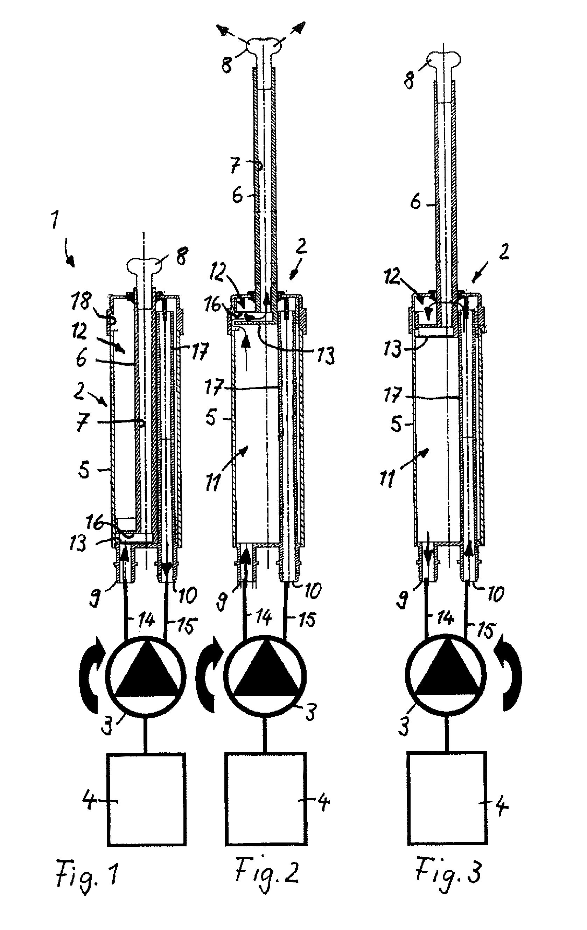

Wie in Fig. 1 dargestellt, umfasst die Scheinwerferreinigungsanlage 1 eine Hubdüse 2, eine Pumpe 3 und einen Vorratsbehälter 4. Die Scheinwerferreinigungsanlage 1 ist zum Einsatz in einem Kraftfahrzeug zur Reinigung der Frontscheinwerfer vorgesehen, wobei grundsätzlich auch alternative Anwendungen für die Reinigungsanlage bzw. die Hubdüse 2 in Betracht kommen.

Aus dem Vorratsbehälter 4 wird Fluid, insbesondere Wasser, mittels der Pumpe 3 in die Hubdüse 2 gefördert. Die Hubdüse 2 weist ein vorteilhaft zylindrisches Gehäuse 5 auf, in welchem ein Düsenrohr 6 axial translatorisch verstellbar nach Art eines Teleskopes gehalten ist. Im Inneren des Düsenrohres 6 befindet sich ein Strömungskanal 7, an dessen Stirnseite ein Düsenkopf 8 angeordnet ist, über den das Reinigungsfluid austritt. Das Düsenrohr 6 ist zwischen der in Fig. 1 dargestellten, zurückgezogenen Außerbetriebsposition und der in Fig. 2 dargestellten, ausgefahrenen Betriebsposition zu verstellen. In Außerbetriebsposition ist das Düsenrohr vollständig in den Innenraum des Gehäuses 5 eingefahren, lediglich der Düsenkopf 8 ragt aus dem Gehäuse heraus. In Betriebsposition ist dagegen das Düsenrohr 6 annähernd vollständig aus dem Gehäuse ausgefahren.

Einteilig mit dem Düsenrohr 6 ist eine Trennwand 13 ausgebildet, die an den unteren, ersten und zweiten Strömungsöffnungen 9 und 10 in der der Gehäusewand benachbarten Seite des Düsenrohres 6 gehalten ist und den Innenraum des Gehäuses ausfüllt. Die Trennwand 13 separiert einen ersten Druckraum 11 von einem zweiten Druckraum 12, wobei der erste Druckraum 11 mit der ersten Strömungsöffnung 9 und der zweite Druckraum 12 mit der zweiten Strömungsöffnung 10 kommuniziert. Die beiden Strömungsöffnungen 9 und 10 sind über Leitungen 14 und 15 mit der Pumpe 3 verbunden, wobei je nach Förderrichtung der Pumpe 3 Fluid über die Öffnung 9 eingeleitet und über die Öffnung 10 ausgeleitet wird oder eine Durchströmung in Gegenrichtung erfolgt.

Wie einem Vergleich der Figuren 1 und 2 zu entnehmen, wird zum Überführen des Düsenrohres aus der zurückgezogenen Außerbetriebsposition (Fig. 1) in die elongierte Betriebsposition (Fig. 2) die Förderpumpe 3 in der Weise betätigt, dass das Fluid aus dem Vorratsbehälter 4 über die erste Strömungsöffnung 9 in den ersten Druckraum 11 gefördert wird, der sich unterhalb der Trennwand 13 befindet, so dass der hydraulische Druck die Trennwand 13 und damit auch das Düsenrohr 6 in Ausschubrichtung kraftbeaufschlagt. Daraufhin bewegen sich die Trennwand 13 und das Düsenrohr 6 axial in Richtung der Betriebsposition, wodurch der erste Druckraum 11 sich kontinuierlich vergrößert und mit dem Fluid aufgefüllt wird. Mit zunehmender Elongationsbewegung verkleinert sich zugleich der zweite Druckraum 12 auf der Gegenseite der Trennwand 13. Dieser zweite Druckraum 12 ist über ein Verbindungsrohr 17, welches im Inneren des Gehäuses 5 geführt ist, mit der zweiten Strömungsöffnung 10 verbunden. Fluid, welches sich im zweiten Druckraum 12 befindet, kann somit bei einer Ausschubbewegung des Düsenrohres 6 aus dem zweiten Druckraum 12 und über das Verbindungsrohr 17 über die zweite Strömungsöffnung 10 und die Leitung 15 austreten.

In die Trennwand 13 ist ein quer zur Ausschubrichtung des Düsenrohrs verlaufender Verbindungskanal 16 eingebracht. Während der Überführungsbewegung von der zurückgezogenen Außerbetriebsposition in die ausgelenkte Betriebsposition liegt die eine Mündungsöffnung des Verbindungskanals 16 an der Innenwand des Gehäuses 5 an und ist dadurch verschlossen. Die gegenüberliegende Mündungsöffnung des Verbindungskanals 16 mündet in den Strömungskanal 7, der im Düsenrohr 6 verläuft. Mit Erreichen der Betriebsposition (Fig. 2) gelangt die an der Innenwand anliegende Mündungsöffnung des Verbindungskanals 16 in den Bereich eines Bypass 18, der als radiale Erweiterung in die Innenwand des Gehäuses 5 eingebracht ist. Dadurch wird die Mündungsöffnung des Verbindungskanals 16 freigegeben und das im ersten Druckraum 11 befindliche Fluid kann über den Bypass 18 in den Verbindungskanal 16 und weiter in den Strömungskanal 7 einströmen und über den Düsenkopf 8, wie in Fig. 2 dargestellt, austreten. In dieser Betriebsposition nimmt der zweite Druckraum 12 seine minimale Größe ein, ein weiterer Strömungsabfluss aus dem zweiten Druckraum 12 findet nicht statt, da der zweite Druckraum 12 nicht weiter verkleinert wird.

In Fig. 3 ist die Hubdüse 2 zu Beginn der Rückstellbewegung von der Betriebsposition in die Außerbetriebsposition dargestellt. Diese Rückstellbewegung wird mithilfe der Pumpe 3 durchgeführt, indem die Förderrichtung der Pumpe 3 umgekehrt und Fluid über die zweite Leitung 15 und die zweite Strömungsöffnung 10 in den zweiten Druckraum 12 gefördert wird. Die Trennwand 13 wird dadurch in Richtung des Bodens des Gehäuses mit den Strömungsöffnungen 9 und 10 gedrückt, wodurch das Düsenrohr 6 wieder eingefahren wird. Das Fluid, welches sich im ersten Druckraum 11 befindet, wird durch die Verkleinerung des ersten Druckraumes über die erste Strömungsöffnung 9 und die Leitung 14 abgeleitet.

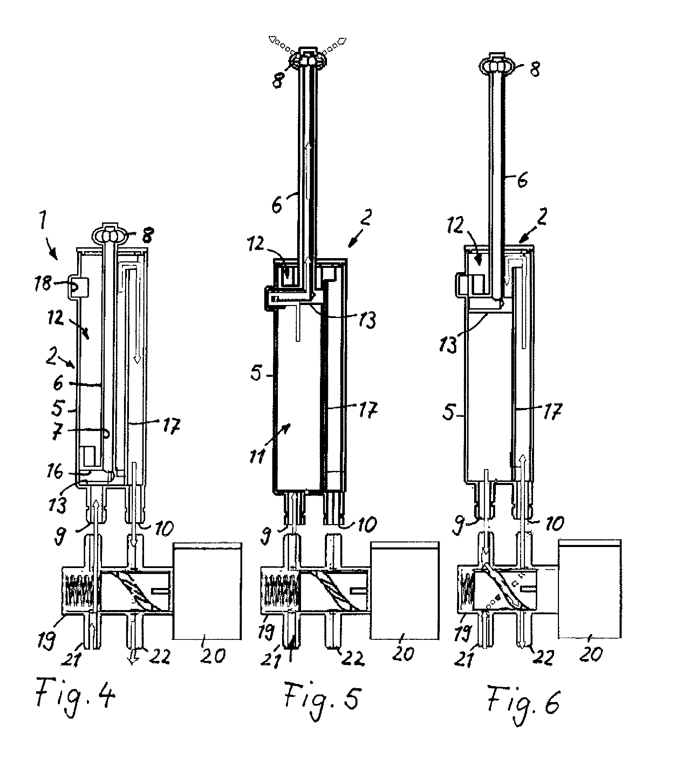

Im zweiten Ausführungsbeispiel gemäß den Figuren 4 bis 6 ist die Hubdüse 2 gleich aufgebaut wie beim ersten Ausführungsbeispiel, so dass insoweit auf die dortige Beschreibung verwiesen werden kann. lm Unterschied zum ersten Ausführungsbeispiel ist der Scheinwerferreinigungsanlage jedoch ein Schaltventil 19 zugeordnet, welches der Hubdüse 2 vorgelagert ist und von einem Stellglied 20 zu betätigen ist. Das Schaltventil 19 ist als 4/2-Wegeventil ausgebildet und mit den beiden Strömungsöffnungen 9 und 10 im Gehäuse 5 der Hubdüse 2 verbunden. Über das Schaltglied des Schaltventils 19 kann die Strömungszufuhr in das Gehäuseinnere der Hubdüse 2 wahlweise über die Strömungsöffnung 9 oder die Strömungsöffnung 10 eingestellt werden, wobei die Zuleitung zum Schaltventil 19 unabhängig von der Ableitung aus dem Schaltventil in eine der Strömungsöffnungen 9 bzw. 10 immer über einen gleichen Strömungsstutzen 21 erfolgt, wohingegen der Rücklauf immer über einen zweiten Strömungsstutzen 22 durchgeführt wird. Dies ermöglicht die Verwendung einer einfach aufgebauten, so genannten Monopumpe, bei der keine Umkehrung der Drehrichtung des elektrischen Pumpenmotors erforderlich ist. Die Steuerung der Strömungszufuhr wahlweise in die erste oder in die zweite Strömungsöffnung 9 bzw. 10 erfolgt allein über eine Einstellung des Schaltventils 19 mithilfe des Stellgliedes 20.

## Patentansprüche

1. Hubdüse, insbesondere in einer Scheinwerferreinigungsanlage in einem Kraftfahrzeug, mit einem in einem Gehäuse (5) verstellbar angeordneten Düsenrohr (6), das einen Strömungskanal (7) für ein Fluid aufweist, wobei das Düsenrohr (6) durch den Druck des Fluids von einer Außerbetriebsposition in der Weise in eine Betriebsposition verstellbar ist, dass in der Außerbetriebsposition das Fluid in einen ersten Druckraum (11) im Gehäuse (5) eintritt und das Düsenrohr (6) in Richtung der Betriebsposition beaufschlagt, **dadurch gekennzeichnet, dass** in der Betriebsposition der erste Druckraum (11) mit dem Strömungskanal (7) im Düsenrohr (6) kommuniziert und dass im Gehäuse (5) ein vom ersten Druckraum (11) separat ausgebildeter zweiter Druckraum (12) angeordnet ist, in den Fluid einführbar ist, wobei das in den zweiten Druckraum (12) eingeströmte Fluid das Düsenrohr (6) in Richtung der Außerbetriebsposition beaufschlagt.

2. Hubdüse nach Anspruch 1, **dadurch gekennzeichnet, dass** in das Gehäuse (5) separat ausgeführte erste und zweite Strömungsöffnungen (9, 10) eingebracht sind, die mit dem ersten bzw. mit dem zweiten Druckraum (11, 12) verbunden sind.

3. Hubdüse nach Anspruch 2, **dadurch gekennzeichnet, dass** die zweite Strömungsöffnung (10) über ein Verbindungsrohr (17) im Gehäuse (5) mit dem zweiten Druckraum (12) verbunden ist.

4. Hubdüse nach einem der Ansprüche 1 bis 3, **dadurch gekennzeichnet, dass** ein Verbindungskanal (16) zwischen dem ersten Druckraum (11) und dem Strömungskanal (7) im Düsenrohr (6) vorgesehen ist und dass der Verbindungskanal (16) in der Betriebsposition des Düsenrohrs (6) freigegeben ist.

5. Hubdüse nach Anspruch 4, **dadurch gekennzeichnet, dass** der Verbindungskanal (16) in einer Trennwand (13) angeordnet ist, die fest mit dem Düsenrohr (6) verbunden ist und den ersten von dem zweiten Druckraum (11, 12) separiert.

6. Hubdüse nach Anspruch 5, **dadurch gekennzeichnet, dass** eine Mündungsöffnung des Verbindungskanals (16) in der Außerbetriebsposition an der Innenwand des Gehäuses (5) anliegt und verschlossen ist und in der Betriebsposition mit einem in die Innenwand des Gehäuses (5) eingebrachten Bypass (18) kommuniziert.

7. Hubdüse nach Anspruch 6, **dadurch gekennzeichnet, dass** der Verbindungskanal (16) quer zur Verstellrichtung des Düsenrohrs (6) verläuft.

8. Reinigungsanlage, insbesondere Scheinwerferreinigungsanlage, mit einer Hubdüse nach einem der Ansprüche 1 bis 7, mit einer Pumpe (3) zur Förderung des Fluids wahlweise in den ersten oder zweiten Druckraum (11, 12).

9. Reinigungsanlage nach Anspruch 8, **dadurch gekennzeichnet, dass** die Pumpe über ein Schaltventil (19) mit der ersten und der zweiten Strömungsöffnung (9, 10) im Gehäuse verbunden ist und je nach Stellung des Schaltventils (19) Fluid entweder in den ersten oder in den zweiten Druckraum (11, 12) fördert.

10. Reinigungsanlage nach Anspruch 8, **dadurch gekennzeichnet, dass** die Pumpe (3) direkt mit den beiden Strömungsöffnungen (9, 10) im Gehäuse (5) verbunden ist, wobei die Fluidförderung in die erste oder die zweite Strömungsöffnung (9, 10) über die Drehrichtung des Pumpenmotors der Pumpe zu steuern ist.
